# EUROPÄISCHE PATENTSCHRIFT

(11) **EP 3 361 028 B1**
(45) Veröffentlichungstag und Bekanntmachung des Hinweises auf die Patenterteilung: **13.11.2024**
(21) Anmeldenummer: 17207516.0
(22) Anmeldetag: 14.12.2017
(51) Int. Cl.: E05F 1/12, E05F 5/00, E05F 15/611, E05F 15/63, E05F 15/71, E05F 15/79

(54) **ANTRIEBSEINHEIT**
DRIVE UNIT
UNITÉ D'ENTRAÎNEMENT

(30) Priorität: 08.02.2017 DE 102017201957
(43) Veröffentlichungstag der Anmeldung: 15.08.2018
(73) Patentinhaber: GEZE GmbH, 71229 Leonberg (DE)
(72) Erfinder: Hucker, Dr., Matthias, 76359 Marxzell (DE); Evertz, Jörg, 8903 Birmensdorf (CH); Baur, Oliver, 8002 Zürich (CH); Hasenfratz, Simon Thomas, 8045 Zürich (CH); Sommer, Remo, 8004 Zürich (CH)

(56) Entgegenhaltungen:
- DE-A1- 4 231 984
- US-A1- 2009 265 992
- US-A1- 2010 242 368
- US-B1- 6 452 353

## Beschreibung

Die vorliegende Erfindung betrifft eine Antriebseinheit zum Schließen eines Flügels einer Tür oder eines Fensters, mit einem Energiespeicher zum Bereitstellen einer Schließkraft zum Schließen des Flügels, insbesondere Schließerfeder, einer der Schließkraft entgegenwirkenden Dämpfungseinrichtung, die einen als Generator betreibbaren und mit einem Betätigungselement der Antriebseinheit koppelbaren Elektromotor umfasst, und einer Steuereinrichtung zum Ansteuern des Elektromotors.

Derartige Antriebseinheiten werden insbesondere an Türen und Toren dazu eingesetzt, den betreffenden Tür- oder Torflügel nach dessen manuellem Öffnen und anschließendem Loslassen kraftbetätigt wieder zu schließen. Häufig ist diejenige Komponente der Antriebseinheit, welche die Schließkraft bereitstellt, am oberen Rand des Türblatts befestigt und über einen oder mehrere Hebel mit einem oberhalb des Türblatts angeordneten Lagerelement wie einer Führungsschiene oder einem Schwenklager gekoppelt. Es kann jedoch auch sein, dass das Lagerelement am Türblatt und die Antriebseinrichtung an der Zarge, der Wand oder der Decke befestigt ist.

Die Steuereinrichtung kann ein oder mehrere Schaltelemente umfassen und dazu ausgebildet sein, zum Steuern oder Regeln der Dämpfung die Motorklemmen des Elektromotors wahlweise kurzzuschließen und zu trennen und so eine Pulsweitenmodulation des Motorstroms zu bewirken, wie dies in der DE 10 2015 200 284 B3 beschrieben ist. Eine solche Pulsweitenmodulation des Motorstroms ermöglicht beispielsweise die Einhaltung einer gewünschten Schließzeit unabhängig von der Temperatur und von Alterungseffekten.

In DE 42 31 984 A1 wird ein elektromechanischer Drehtürantrieb beschrieben, der für den Schließvorgang die in einem Federelement gespeicherte Energie verwendet und gleichzeitig den für den Öffnungsvorgang benutzten Getriebemotor beim Schließvorgang im geregelten Generatorbetrieb betreibt.

In US 2009/265992 A1 wird ein Türantrieb mit einem Motor zur Öffnung der Tür gegen eine Federkraft und einen Türpositionssensor zur Übertragung eines die Türposition anzeigenden Signals beschrieben.

US 2010/242368 A1 lehrt einen Türantrieb mit einem Arm, der sich von dem Türantrieb aus erstreckt, und einen Motor, der den Arm bewegt, um die Tür zwischen einer Schließposition und einer Öffnungsposition sowie zwischen der Öffnungsposition und der Schließposition zu bewegen. Ein Stromsensor erzeugt ein Signal, welches dem Strom zum Motor entspricht. Ein Positionssensor, der mit dem Türarm verbunden ist, erzeugt ein Positionssignal, das der Position der Tür relativ zum Rahmen entspricht. Eine Steuerung kommuniziert mit dem Sensor und dem Motor. Die Steuerung steuert den Motorstrom zum Motor in Abhängigkeit vom Stromsignal und vom Positionssignal.

Die Abnehmer von Türschließern und dergleichen werden immer anspruchsvoller und wünschen sich insbesondere eine weitere Erhöhung des Bedienkomforts und des Begehkomforts.

Die Lösung dieser Aufgabe erfolgt durch eine Antriebseinheit mit den Merkmalen des Anspruchs 1.

Erfindungsgemäß ist die Steuereinrichtung dazu ausgebildet, eine Soll-Bahnkurve festzulegen, welche eine Stellung des Flügels oder eine Schließgeschwindigkeit des Flügels in Abhängigkeit von der Zeit angibt, und die Ansteuerung des Elektromotors zur Dämpfung der Schließbewegung des Flügels anhand der festgelegten Soll-Bahnkurve durchzuführen. Durch Vorgabe des Verlaufs der Schließbewegung kann im Rahmen der Möglichkeiten der Motorsteuerung ein gewünschtes Schließverhalten eingestellt werden. Auf diese Weise ist es möglich, für ein situationsgerechtes Schließverhalten zu sorgen. Der Begehkomfort der zugehörigen Tür ist dadurch beträchtlich erhöht. Die Steuereinrichtung kann insbesondere dazu ausgebildet sein, die Stellung des Flügels oder die Schließgeschwindigkeit des Flügels gemäß der Soll-Bahnkurve zu regeln, also entweder eine Positionsregelung oder eine Geschwindigkeitsregelung anhand der Soll-Bahnkurve durchzuführen. Die Soll-Bahnkurve kann insbesondere eine Winkelstellung des Flügels oder eine Winkelgeschwindigkeit des Flügels in Abhängigkeit von der Zeit angeben. Weiterbildungen der Erfindung sind in den abhängigen Ansprüchen, der Beschreibung sowie der beigefügten Zeichnung angegeben.

Die Steuereinrichtung ist erfindungsgemäß dazu ausgebildet, beim Festlegen der Soll-Bahnkurve einen Zulässigkeitsbereich zu berücksichtigen, der durch zwei Grenzkurven bestimmt ist. Die Steuereinrichtung lässt also vorzugsweise nur solche Soll-Bahnkurven zu, deren Einhaltung im Rahmen der Motorsteuerung auch realisierbar ist. Eine der Grenzkurven kann sich durch ein Weglassen jeglicher Dämpfung ergeben, während sich die andere Grenzkurve durch eine maximale Dämpfung während des gesamten Schließvorgangs ergeben kann.

Die Grenzkurven können in Abhängigkeit von einer Bewegungsvorgabe für den zu schließenden Flügel, insbesondere einer gewünschten Schließzeit und/oder einer gewünschten Endgeschwindigkeit, bestimmt sein. Bei dieser Ausgestaltung sorgt die Steuereinrichtung also nicht nur für eine Einhaltung des gewünschten Schließverlaufs, sondern zusätzlich auch für die Einhaltung wichtiger Gesamtparameter unabhängig von äußeren Einflüssen.

Erfindungsgemäß sind zusätzlich die Grenzkurven in Abhängigkeit von einer ermittelten Ausgangsstellung des zu schließenden Flügels, einer maximalen Dämpfungskraft der Dämpfungseinrichtung und einer Stellreserve bestimmt. Der Bereich zulässiger Soll-Bahnkurven wird hierdurch unter Erhöhung der Zuverlässigkeit der Steuerung weiter eingeschränkt.

Die Steuereinrichtung kann dazu ausgebildet sein, die Soll-Bahnkurve in Abhängigkeit von einem Auswahlkriterium aus einem Satz diskreter Soll-Bahnkurven auszuwählen. Dies ermöglicht eine besonders einfache und schnelle Steuerung, da die Soll-Bahnkurve nicht berechnet werden muss. Insbesondere ist es nicht erforderlich, die Steuereinrichtung für einen hohen Rechenaufwand auszulegen. Die diskreten Soll-Bahnkurven können in einem Speicher der Steuereinrichtung oder in einem externen Speicher abgelegt sein.

Die Soll-Bahnkurven des Satzes diskreter Soll-Bahnkurven können hinsichtlich wenigstens eines Vorgabe-Parameters übereinstimmen und sich hinsichtlich wenigstens eines Variations-Parameters unterscheiden. Bei dem Vorgabe-Parameter kann es sich beispielsweise um eine Bewegungsvorgabe wie die Schließzeit handeln. Als Variations-Parameter kommen beispielsweise eine Anfangssteigung der Bahnkurve, eine Endsteigung der Bahnkurve oder ein Formfaktor der Bahnkurve in Betracht.

Gemäß einer weiteren Ausgestaltung der Erfindung ist die Steuereinrichtung dazu ausgebildet, die Soll-Bahnkurve in Abhängigkeit vom aktuellen Datum, von der aktuellen Uhrzeit und/oder vom aktuellen Wochentag festzulegen. Beispielsweise könnte in solchen Zeitabschnitten, in denen eine hohe Begehfrequenz der Tür zu erwarten ist, ein langsameres Schließverhalten gewählt werden als in Zeitabschnitten, in denen nur eine geringe Begehfrequenz zu erwarten ist.

Gemäß einer weiteren Ausführungsform der Erfindung ist die Steuereinrichtung dazu ausgebildet, die Soll-Bahnkurve in Abhängigkeit von einem ermittelten Umgebungsparameter, insbesondere von einer Temperatur, einer Temperaturdifferenz und/oder von einem Luftdruck, festzulegen. Beispielsweise kann bei geringen Temperaturen und/oder einer hohen Temperaturdifferenz zwischen Innenraum und Außenraum ein relativ schnelles Schließverhalten vorgegeben werden. Bei Winddruck kann es günstig sein, die Schließgeschwindigkeit oder die Endgeschwindigkeit zu erhöhen, um ein vollständiges Schließen sicherzustellen.

Die Steuereinrichtung kann auch dazu ausgebildet sein, die Soll-Bahnkurve in Abhängigkeit von einer ermittelten Häufigkeit vorangegangener Öffnungsvorgänge des Flügels innerhalb eines vorgegebenen Zeitraums festzulegen. Mit anderen Worten kann das Schließverhalten des Flügels an die aktuelle Begehfrequenz der Tür angepasst werden. Besonders günstig ist es beispielsweise, den Flügel bei hoher Begehfrequenz länger offen zu halten als bei geringer Begehfrequenz.

Gemäß einer weiteren Ausgestaltung der Erfindung ist die Steuereinrichtung dazu ausgebildet, die Soll-Bahnkurve in Abhängigkeit von einer maximalen Öffnungsstellung des Flügels, einer Öffnungsgeschwindigkeit des Flügels und/oder der Form einer tatsächlichen Bahnkurve des Flügels während eines vorangegangenen Öffnungsvorgangs festzulegen. Beispielsweise kann vorgesehen sein, dass der Flügel möglichst lange offen gehalten wird, wenn er zuvor vollständig geöffnet wurde. Ein vergleichsweise schnelles Schließen kann hingegen bei unvollständiger Flügelöffnung vorgesehen sein.

Es kann auch vorgesehen sein, dass die Steuereinrichtung Mittel zum Kommunizieren mit der Steuereinrichtung einer weiteren Antriebseinheit umfasst und dazu ausgebildet ist, die Soll-Bahnkurve in Abhängigkeit von einem Betriebszustand der weiteren Antriebseinheit festzulegen. Die Steuereinrichtung kann also beispielsweise eine Schließverzögerung vorsehen, wenn eine benachbarte Tür geöffnet wird, während die betreffende Tür noch geöffnet oder teilweise geöffnet ist. Die Person, welche die benachbarte Tür geöffnet hat, kann dann eventuell die betreffende Tür noch passieren, ohne sie erneut öffnen zu müssen.

Gemäß einer weiteren Ausführungsform der Erfindung ist die Steuereinrichtung dazu ausgebildet, die Soll-Bahnkurve in Abhängigkeit von einem Unfallverhütungskriterium festzulegen. Beispielsweise kann die Steuereinrichtung durch geeignetes Festlegen der Soll-Bahnkurve für eine Einhaltung eines unkritischen Maximalwerts der kinetischen Energie des Flügels sorgen.

Die Steuereinrichtung ist erfindungsgemäß dazu ausgebildet, die Soll-Bahnkurve vor jedem Schließvorgang neu festzulegen. Das Schließverhalten eines mit der Antriebseinheit versehenen Flügels ist bei dieser Ausgestaltung also nicht wie bei hydraulisch gedämpften Türschließern dauerhaft festgelegt, sondern kann sich anwendungs- und situationsabhängig ändern.

Weiterhin kann die Steuereinrichtung dazu ausgebildet sein, die Soll-Bahnkurve bedarfsweise während eines bereits begonnenen Schließvorgangs neu festzulegen. Eine derartige dynamische Anpassung des Schließverhaltens kann in vielen Situationen günstig sein, beispielsweise indem nach einem festgestellten Widerstand die Schließgeschwindigkeit erhöht wird, um ein zuverlässiges Schließen zu gewährleisten.

Grundsätzlich könnte die Steuereinrichtung auch dazu ausgebildet sein, die Soll-Bahnkurve in Abhängigkeit von wenigstens einem Konfigurationsparameter dauerhaft festzulegen. Der Konfigurationsparameter könnte beispielsweise durch einen Monteur beim Einbau der Antriebseinheit ausgewählt werden, zum Beispiel mittels eines oder mehrerer Bedienelemente.

Eine spezielle Ausgestaltung der Erfindung sieht vor, dass die Steuereinrichtung dazu ausgebildet ist, die Soll-Bahnkurve anhand eines manuell durchgeführten Schließvorgangs einzulernen. Beim Einbau kann der Monteur den Flügel manuell auf eine Weise schließen, wie es auch für einen selbsttätigen Schließvorgang gewünscht ist. Dies ermöglicht eine besonders einfache und komfortable Vorgabe des Schließverhaltens.

Die Steuereinrichtung kann dazu ausgebildet sein, für die Ansteuerung des Elektromotors anhand der festgelegten Soll-Bahnkurve eine Interpolation von Stützstellen der Soll-Bahnkurve auszuführen. Dies ermöglicht eine besonders exakte Steuerung.

Alternativ kann die Steuereinrichtung dazu ausgebildet sein, die Soll-Bahnkurve aus einer Nachschlagetabelle auszulesen. Der Rechenaufwand ist hierbei minimal.

Die Steuereinrichtung kann dazu ausgebildet sein, die Soll-Bahnkurve in einen Soll-Rotationsverlauf einer Motorwelle des Elektromotors oder einer Ausgangswelle der Antriebseinheit umzurechnen und den Elektromotor auf Grundlage des Soll-Rotationsverlaufs anzusteuern. Hierdurch ist es möglich, die Übersetzung des Motorgetriebes und/oder des Türschließer-Gestänges bei der Steuerung zu berücksichtigen und so die Steuerung derart durchzuführen, dass der Verlauf der Flügelposition direkt der vorgegebenen Kurve entspricht.

Die Erfindung betrifft auch ein Verfahren zum Schließen eines Flügels einer Tür oder eines Fensters mittels einer Antriebseinheit, die einen Energiespeicher zum Bereitstellen einer Schließkraft zum Schließen des Flügels, eine der Schließkraft entgegenwirkende Dämpfungseinrichtung, die einen als Generator betreibbaren und mit einem Betätigungselement der Antriebseinheit koppelbaren Elektromotor umfasst, und eine Steuereinrichtung zum Ansteuern des Elektromotors aufweist, mittels einer wie vorstehend beschriebenen Antriebseinheit.

Erfindungsgemäß wird eine Soll-Bahnkurve festgelegt, welche eine Stellung des Flügels oder eine Schließgeschwindigkeit des Flügels in Abhängigkeit von der Zeit angibt, und die Ansteuerung des Elektromotors zur Dämpfung der Schließbewegung des Flügels wird auf Grundlage der festgelegten Soll-Bahnkurve durchgeführt.

Die Erfindung wird nachfolgend beispielhaft unter Bezugnahme auf die Zeichnungen beschrieben.
- Fig. 1: ist eine schematische Darstellung eines erfindungsgemäßen Türschließers.
- Fig. 2: ist ein Blockdiagramm, das eine Positionsregelung des in Fig. 1 gezeigten Türschließers darstellt.
- Fig. 3: ist ein Blockdiagramm, das eine Geschwindigkeitsregelung des in Fig. 1 gezeigten Türschließers darstellt.
- Fig. 4: ist ein Diagramm, das den Bereich zulässiger Bahnkurven eines Türflügels angibt.
- Fig. 5: zeigt einen durch zusätzliche Vorgaben eingeschränkten Bereich zulässiger Bahnkurven eines Türflügels.
- Fig. 6: zeigt einen weiter eingeschränkten Bereich zulässiger Bahnkurven eines Türflügels.
- Fig. 7: zeigt einen durch eine Stellreserve weiter eingeschränkten Bereich zulässiger Bahnkurven eines Türflügels.
- Fig. 8: zeigt einen Satz diskreter Soll-Bahnkurven für einen Türflügel.
- Fig. 9: zeigt zwei miteinander kommunizierende erfindungsgemäße Türschließer.

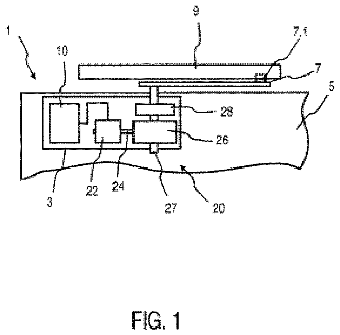

Der in Fig. 1 gezeigte Türschließer 1 weist ein Gehäuse 3 auf, in welchem ein mechanischer Energiespeicher in Form einer Schließerfeder 28 und eine Bremsvorrichtung 20 angeordnet sind. Die Schließerfeder 28 wird durch manuelles Öffnen des drehbaren Türflügels 5 mit potentieller Energie aufgeladen, welche den losgelassenen Türflügel 5 wieder schließt. Die Bremsvorrichtung 20 dämpft die Bewegung des Türflügels 5 und umfasst einen als Generator betriebenen Elektromotor 22, dessen Motorwelle 24 durch eine Bewegung des Türflügels 5 drehbar ist und an dessen nicht dargestellten Motorklemmen eine bewegungsabhängige Motorspannung entsteht, welche an einen Bremsstromkreis angelegt ist. Der Bremsstromkreis weist ein oder mehrere Schaltelemente auf, über welche die Motorklemmen kurzgeschlossen werden können. Eine zum Ansteuern des Elektromotors 22 vorgesehene elektronische Steuereinrichtung 10 führt eine Pulsweitenmodulation des Motorstroms durch und stellt eine wirksame Bremskraft zur Dämpfung der Bewegung des Türflügels 5 ein. Vorzugsweise umfasst die Steuereinrichtung 10 einen Mikrocontroller. Der Elektromotor 22 ist vorzugsweise als permanentmagnetisch erregter Gleichstrommotor ausgeführt. Die Pulsweitenmodulation kann insbesondere so durchgeführt werden, wie dies in der DE 10 2015 200 284 B3 angegeben ist.

Bei dem in Fig. 1 dargestellten Ausführungsbeispiel ist das Gehäuse 3 flügelfest am oberen linken Randbereich des Türflügels 5 montiert. Die Motorwelle 24 des Elektromotors 22 ist über ein Getriebe 26 mit einer Abtriebswelle 27 gekoppelt, welche mit einem Gleitarm 7 gekoppelt ist. Der Gleitarm 7 weist an seinem freien Ende einen Gleitstein 7.1 auf, welcher in einer blendenfest montierten Gleitschiene 9 geführt ist. Beim Öffnen und Schließen des Türflügels 5 wird über das Getriebe 26 die Motorwelle 24 des Elektromotors 22 gedreht. Anstelle der Anordnung aus Gleitarm 7 und Gleitschiene 9 könnte auch eine Scherenhebel-Anordnung vorgesehen sein, deren eines Ende in einem blendenfesten Schwenklager sitzt.

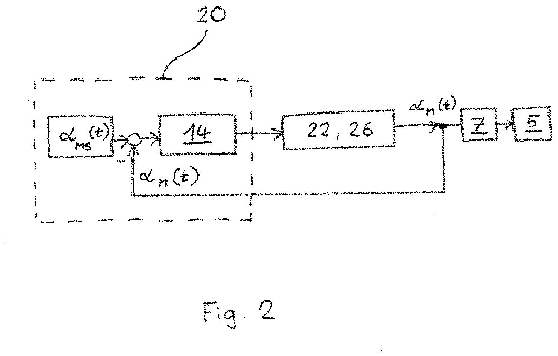

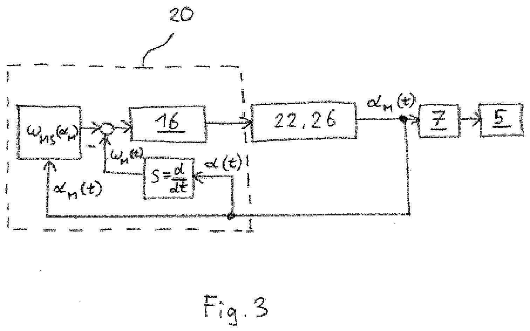

Die Steuereinrichtung 10 ist dazu ausgebildet, eine Soll-Bahnkurve festzulegen, welche den Öffnungswinkel α des Türflügels 5 in Abhängigkeit von der Zeit t angibt. Die über den Elektromotor 22 ausgeübte Dämpfung der Schließbewegung des Türflügels 5 wird anhand der festgelegten Soll-Bahnkurve durchgeführt. Die Regelung selbst erfolgt hierbei nach grundsätzlich bekannten Prinzipien, beispielsweise mittels eines Positionsreglers 14 wie in Fig. 2 dargestellt oder mittels eines Geschwindigkeitsreglers 16 wie in Fig. 3 dargestellt. In Fig. 2 und 3 bezeichnen *α_{M}*(*t*) die tatsächliche Winkelstellung der Motorwelle 24 oder der Abtriebswelle 27 als Funktion der Zeit, *ω_{M}*(*t*) die tatsächliche Winkelgeschwindigkeit der Motorwelle 24 oder der Abtriebswelle 27 als Funktion der Zeit, *α*(*t*) die Winkelstellung des Türflügels 5 als Funktion der Zeit, *α_{MS}*(*t*) die Soll-Winkelstellung der Motorwelle 24 oder der Abtriebswelle 27 als Funktion der Zeit und *ω_{MS}*(*t*) die Soll-Winkelgeschwindigkeit der Motorwelle 24 oder der Abtriebswelle 27 als Funktion der Zeit. Das Festlegen der Soll-Bahnkurve kann eine Interpolation von vorgegebenen Stützstellen umfassen. Alternativ kann die Soll-Bahnkurve aus einer Nachschlagetabelle ausgelesen werden. Die Steuereinrichtung 10 definiert innerhalb des Bereichs technisch realisierbarer Bahnkurven solche, die mit einem bestimmten Begehkomfort der Tür einhergehen.

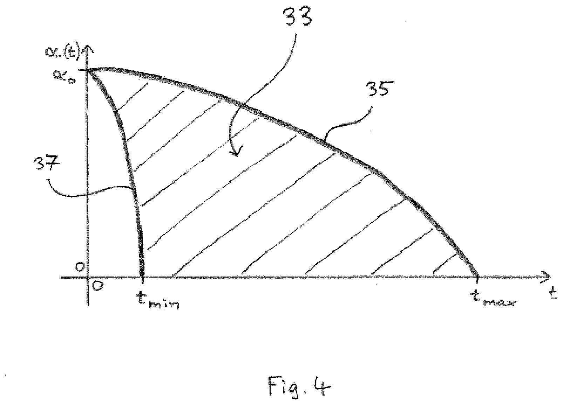

Da der in Fig. 1 gezeigte Türschließer 1 autark ausgeführt ist, kann die Bremsvorrichtung 20 den Türflügel 5 nur bremsen, nicht aber beschleunigen oder halten. Außerdem lässt die Konstruktion des Türschließers 1 aufgrund unvermeidlicher Reibungsverluste keine beliebig große Bremskraft zu. Diese und ähnliche Umstände begrenzen die Auswahl der Bahnkurven, welche die Steuereinrichtung 10 zum Dämpfen der Schließbewegung des Türflügels 5 heranziehen kann. In Fig. 4 ist beispielhaft ein erster Zulässigkeitsbereich 33 möglicher Bahnkurven in einem Öffnungswinkel-Zeit-Diagramm dargestellt. α₀ bezeichnet den Ausgangswinkel, *tₘᵢₙ* die minimale Schließzeit und *tₘₐₓ* die maximale Schließzeit. Die obere Grenzkurve 35 des ersten Zulässigkeitsbereichs 33 ist dadurch gegeben, dass eine maximale Dämpfung vorgesehen wird, das heißt dass die Motorklemmen des Elektromotors 22 während des gesamten Schließvorgangs kurzgeschlossen sind. Die untere Grenzkurve 37 ist dadurch gegeben, dass überhaupt keine Dämpfung vorgesehen wird, das heißt dass die Motorklemmen des Elektromotors 22 während des gesamten Schließvorgangs getrennt sind.

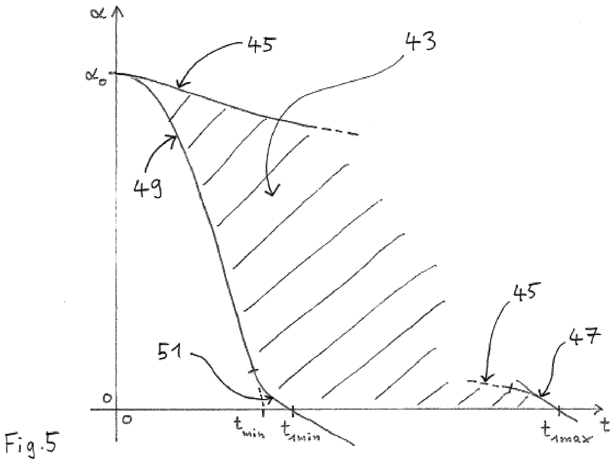

Wenn die Forderung erhoben wird, dass der Türflügel 5 die Schließlage mit der End-Winkelgeschwindigkeit ωₑ erreicht, so ist die Auswahl möglicher Bahnkurven auf den in Fig. 5 gezeigten zweiten Zulässigkeitsbereich 43 eingeschränkt. Der Grenzkurvenabschnitt 45 ergibt sich daraus, dass der Türflügel 5 bei α₀ mit der Anfangs-Winkelgeschwindigkeit 0 startet und während des Schließvorgangs mit dem maximal möglichen Bremsmoment gedämpft wird. Der Grenzkurvenabschnitt 47 ergibt sich derart, dass die Schließlage mit der End-Winkelgeschwindigkeit ωₑ erreicht wird und ein glatter Anschluss an den Grenzkurvenabschnitt 45 vorliegt.

Der Grenzkurvenabschnitt 49 ergibt sich dadurch, dass der Türflügel 5 bei α₀ mit der Anfangs-Winkelgeschwindigkeit 0 startet und nicht gedämpft wird, so dass die Beschleunigung maximal ist. Der Grenzkurvenabschnitt 51 ergibt sich dadurch, dass die Schließlage mit der gewünschten End-Winkelgeschwindigkeit ωₑ erreicht wird und der Anschluss zum Grenzkurvenabschnitt 49 glatt ist. Gegenüber dem ersten Zulässigkeitsbereich 33 verschieben sich die Zeitpunkte für den Anfang und das Ende des Schließvorgangs von den Zeitpunkten *tₘᵢₙ* und *tₘₐₓ* zu den Zeitpunkten *t₁ₘᵢₙ* und *t₁ₘₐₓ.*

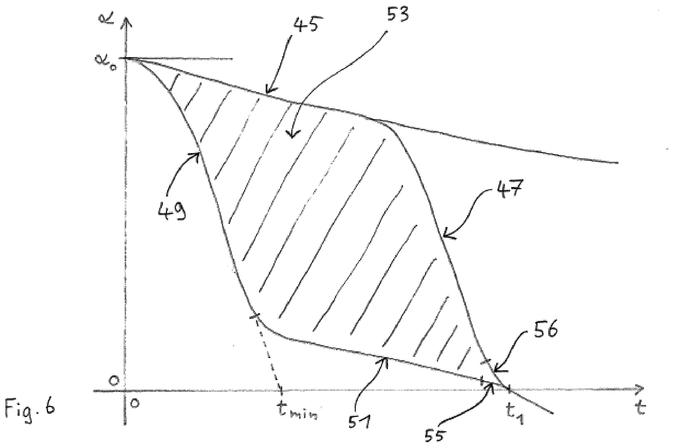

Wird zusätzlich die Forderung erhoben, dass der Türflügel 5 die Schließlage nach der fest vorgegebenen Schließzeit *t₁* mit der End-Winkelgeschwindigkeit *ω₃* erreicht, ergibt sich ein weiter eingeschränkter dritter Zulässigkeitsbereich 53, wie er in Fig. 6 dargestellt ist. Der Grenzkurvenabschnitt 55 ergibt sich dadurch, dass der Türflügel 5 vollständig ungedämpft die Schließlage mit der gewünschten End-Winkelgeschwindigkeit *ωₑ* erreicht. Der Grenzkurvenabschnitt 56 ergibt sich dadurch, dass der Türflügel 5 maximal gedämpft die Schließlage mit der gewünschten End-Winkelgeschwindigkeit *ωₑ* erreicht. Der dritte Zulässigkeitsbereich 53 gibt die Menge aller möglicher Bahnkurven an, bei denen der Türflügel 5 in der Zeit *t₁* aus dem Startwinkel *α₀* die Schließlage mit der End-Winkelgeschwindigkeit *ωₑ* erreicht. Die Form der realisierbaren Bahnkurven innerhalb des Bereichs 53 unterliegt aber gewissen Beschränkungen, da der Elektromotor 22 zum Beispiel den Türflügel 5 nicht beschleunigen oder halten kann.

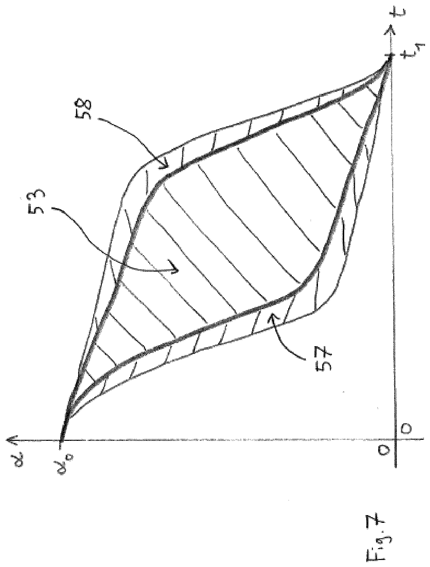

Damit für die Regelung auf eine gewählte Soll-Bahnkurve genug Stellreserve bleibt, wird der Bereich möglicher Bahnkurven weiter eingeschränkt, indem wie in Fig. 7 gezeigt Randbereiche 57, 58 des dritten Zulässigkeitsbereichs 53 freigehalten werden.

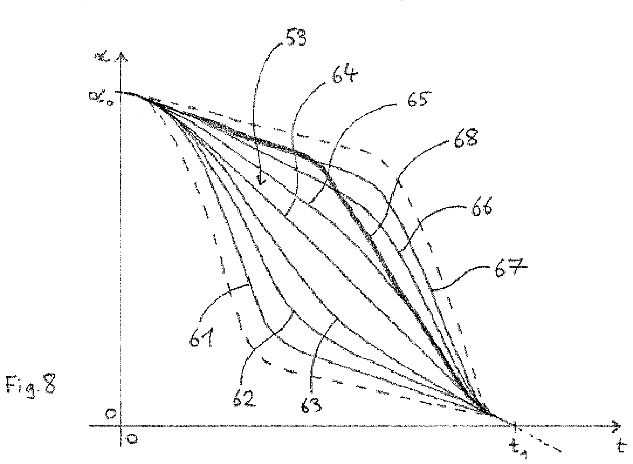

Es werden nun innerhalb des dritten Zulässigkeitsbereichs 53 Soll-Bahnkurven für den Schließvorgang definiert, die sich durch besondere Eigenschaften auszeichnen. Beispiele verschiedener definierter Soll-Bahnkurven 61-68 sind in Fig. 8 dargestellt. Alle gezeigten Soll-Bahnkurven 61-68 schließen den Türflügel 5 in der Zeit *t₁* aus dem Öffnungswinkel *α₀* und erreichen die Schließlage mit der End-Winkelgeschwindigkeit *ωₑ*.

Mit 67 ist diejenige Soll-Bahnkurve bezeichnet, bei welcher der Türflügel 5 den Schließvorgang mit maximaler Dämpfung beginnt, die maximale Dämpfung solange wie möglich beibehalten wird, und anschließend ein möglichst schneller Schließvorgang durchgeführt wird, um die Endlage mit der vorgegebenen End-Winkelgeschwindigkeit *ωₑ* zu erreichen. Mit 61 ist diejenige Soll-Bahnkurve bezeichnet, bei welcher der Türflügel 5 so schnell wie möglich startet und schließt, und danach vor Erreichen der Schließlage der Schließvorgang so langsam wie möglich fortgesetzt wird. Dies kann insbesondere aus Gründen des Personenschutzes günstig sein. Mit 64 ist diejenige Soll-Bahnkurve bezeichnet, bei welcher der Türflügel 5 möglichst lange mit konstanter Winkelgeschwindigkeit schließt, um die Schließlage mit der gewünschten End-Winkelgeschwindigkeit *ωₑ* zu erreichen. Die mit 62, 63, 65 und 66 bezeichneten Soll-Bahnkurven sind sogenannte Zwischenbahnen, deren Anzahl im Prinzip beliebig ist. Die Auswahl der für einen bestimmten Schließvorgang auszuwählenden Soll-Bahnkurve erfolgt durch Vergabe eines Bahnparameters 1 bis 7. Es sind grundsätzlich auch andere Formen von Soll-Bahnkurven innerhalb des dritten Zulässigkeitsbereichs 53 möglich, beispielsweise die Soll-Bahnkurve 68, bei welcher der Türflügel 5 zunächst maximal gedämpft und dann mit konstanter Winkelgeschwindigkeit schließt, um danach die Schließlage mit der gewünschten End-Winkelgeschwindigkeit *ωₑ* zu erreichen.

Die Steuereinrichtung 10 berechnet die Soll-Bahnkurven 61-68 vor jedem Schließvorgang aus Stützstellen mit Interpolation oder liest die jeweilige Soll-Bahnkurve 61-68 vor jedem Schließvorgang aus einer Nachschlagetabelle aus. Als Eingangsgröße dient vorzugsweise der mittels Imkrementalgeber erfasste tatsächliche Winkel *α_{M}*(*t*) der Motorwelle 24 oder der Abtriebswelle 27. Durch Berücksichtigung der Montageart rechnet die Steuereinrichtung 10 die betreffenden Bahnkurven für den Türflügel 5 in Bahnkurven für die Motorwelle 24 oder die Abtriebswelle 27 um. Damit kann eine Regelung der Bahnkurve für den Türflügel 5 unabhängig von der Montageart erfolgen.

Die für die Regelung heranzuziehende Soll-Bahnkurve 61-68 kann vom Monteur beim Einbau des Türschließers 1 parametriert und statisch vorgegeben werden. Der Türschließer 1 schließt dann den Türflügel 5 unabhängig von Umwelteinflüssen wie der Temperatur oder dem Winddruck in der vorgegebenen Schließzeit *t₁* mit der vorgegebenen End-Winkelgeschwindigkeit *ωₑ*.

Bevorzugt ist es jedoch, dass die Steuereinrichtung 10 die für die Regelung des Schließvorgangs zu verwendende Soll-Bahnkurve 61-68 situationsabhängig vor jedem Schließvorgang auswählt oder sogar während des Schließvorgangs dynamisch anpasst. Insbesondere kann die Soll-Bahnkurve 61-68 abhängig von der Begehfrequenz des Türflügels 5 ausgewählt werden. Vorzugsweise bleibt der Türflügel 5 bei hoher Begehfrequenz länger offen als bei geringer Begehfrequenz. Alternativ oder zusätzlich kann die Soll-Bahnkurve 61-68 in Abhängigkeit von der Uhrzeit, dem Wochentag oder dem Datum ausgewählt werden. Insbesondere kann bei zu erwartender hoher Begehfrequenz die Tür möglichst lange offen gehalten werden. Falls lediglich eine geringe Begehfrequenz zu erwarten ist, kann ein vergleichsweise schnelles Schließen des Türflügels 5 vorgesehen werden. Die Soll-Bahnkurve 61-68 kann auch abhängig von der Temperatur ausgewählt werden. Speziell kann ein besonders schnelles Schließen des Türflügels 5 vorgesehen werden, wenn eine große Temperaturdifferenz zwischen Innenraum und Außenraum besteht. Der Türschließer 1 kann zu diesem Zweck mit geeigneten Sensoreingängen versehen sein. Es kann auch vorgesehen sein, dass der Türflügel 5 möglichst lange offen gehalten wird, also maximal gedämpft wird, wenn der Türflügel 5 zuvor vollständig, also zum Beispiel bis zu einem Öffnungswinkel von 90°, geöffnet wurde. Wenn der Türflügel 5 hingegen zuvor nicht vollständig geöffnet wurde, so ist es bevorzugt, ein vergleichsweise schnelles Schließen anzuweisen.

Es kann auch vorgesehen sein, dass der Türflügel 5 relativ langsam schließt, sofern beim vorangegangenen Schließen eine Behinderung festgestellt wurde. Es kann außerdem vorgesehen sein, dass der Türflügel 5 relativ schnell schließt, wenn er zuvor auch schnell geöffnet wurde. Hingegen kann ein eher langsames Schließen vorgesehen sein, wenn der Türflügel 5 zuvor langsam oder zittrig geöffnet wurde. In letzterem Fall ist es nämlich wahrscheinlich, dass eine Person mit schwerem Gepäck oder eine ältere Person durch die Tür geht.

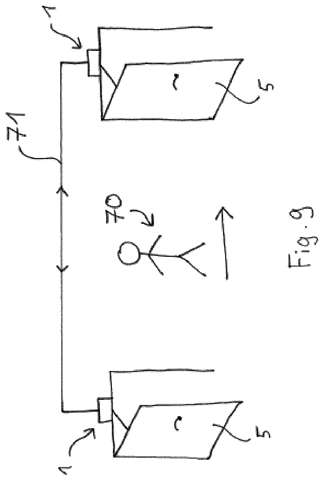

Wird wie in Fig. 9 gezeigt ein benachbarter Türflügel 5 geöffnet, während der betreffende Türflügel 5 noch nicht geschlossen ist, so kann der Türschließer 1 die Dämpfung auf einen Maximalwert erhöhen, so dass eine Person 70 eventuell die zweite Tür noch passieren kann, ohne deren Türflügel 5 öffnen zu müssen. Zu diesem Zweck können die entsprechenden Türschließer 1 über eine Signalleitung 71 oder drahtlos miteinander vernetzt sein.

Die Erfindung ermöglicht auf einfache Weise die situationsgerechte Anpassung des Schließverhaltens eines Türschließers 1.

### Bezugszeichenliste

- 1: Türschließer
- 3: Gehäuse
- 5: Türflügel
- 7: Gleitarm
- 7.1: Gleitstein
- 9: Gleitschiene
- 10: Steuereinrichtung
- 14: Positionsregler
- 16: Geschwindigkeitsregler
- 20: Bremsvorrichtung
- 22: Elektromotor
- 24: Motorwelle
- 26: Getriebe
- 27: Abtriebswelle
- 28: Schließerfeder
- 33: erster Zulässigkeitsbereich
- 35: obere Grenzkurve
- 37: untere Grenzkurve
- 43: zweiter Zulässigkeitsbereich
- 45: Grenzkurvenabschnitt
- 47: Grenzkurvenabschnitt
- 49: Grenzkurvenabschnitt
- 51: Grenzkurvenabschnitt
- 53: dritter Zulässigkeitsbereich
- 55: Grenzkurvenabschnitt
- 56: Grenzkurvenabschnitt
- 57: Randbereich
- 58: Randbereich
- 61-68: Soll-Bahnkurve
- 70: Person
- 71: Signalleitung

## Patentansprüche

1. Antriebseinheit (1) zum Schließen eines Flügels (5) einer Tür oder eines Fensters, mit einem Energiespeicher (28) zum Bereitstellen einer Schließkraft zum Schließen des Flügels (5), insbesondere Schließerfeder, einer der Schließkraft entgegenwirkenden Dämpfungseinrichtung (20), die einen als Generator betreibbaren und mit einem Betätigungselement (27) der Antriebseinheit (1) koppelbaren Elektromotor (22) umfasst, und einer Steuereinrichtung (10) zum Ansteuern des Elektromotors (22),
**dadurch gekennzeichnet, dass**
die Steuereinrichtung (10) dazu ausgebildet ist, eine Soll-Bahnkurve (61-68) festzulegen, welche eine Stellung des Flügels (5) oder eine Schließgeschwindigkeit des Flügels (5) in Abhängigkeit von der Zeit angibt, und die Ansteuerung des Elektromotors (22) zur Dämpfung der Schließbewegung des Flügels (5) anhand der festgelegten Soll-Bahnkurve (61-68) durchzuführen, wobei die Steuereinrichtung (10) dazu ausgebildet ist, beim Festlegen der Soll-Bahnkurve (61-68) einen Zulässigkeitsbereich (33, 43, 53) zu berücksichtigen, der durch zwei Grenzkurven (35, 37) bestimmt ist und die Steuereinrichtung (10) dazu ausgebildet ist, die Soll-Bahnkurve (61-68) vor jedem Schließvorgang neu festzulegen,
wobei ferner die Grenzkurven (35, 37) in Abhängigkeit von einer ermittelten Ausgangsstellung des zu schließenden Flügels (5), einer maximalen Dämpfungskraft der Dämpfungseinrichtung (20) und einer Stellreserve bestimmt sind.

2. Antriebseinheit nach Anspruch 1,
**dadurch gekennzeichnet, dass**
die Grenzkurven (35, 37) in Abhängigkeit von einer Bewegungsvorgabe für den zu schließenden Flügel (5), insbesondere einer gewünschten Schließzeit und/oder einer gewünschten Endgeschwindigkeit, bestimmt sind.

3. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) in Abhängigkeit von einem Auswahlkriterium aus einem Satz diskreter Soll-Bahnkurven (61-68) auszuwählen.

4. Antriebseinheit nach Anspruch 3,
**dadurch gekennzeichnet, dass**
die Soll-Bahnkurven (61-68) des Satzes diskreter Soll-Bahnkurven hinsichtlich wenigstens eines Vorgabe-Parameters übereinstimmen und sich hinsichtlich wenigstens eines Variations-Parameters unterscheiden.

5. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) in Abhängigkeit vom aktuellen Datum, von der aktuellen Uhrzeit und/oder vom aktuellen Wochentag festzulegen.

6. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) in Abhängigkeit von einem ermittelten Umgebungsparameter, insbesondere von einer Temperatur, einer Temperaturdifferenz und/oder von einem Luftdruck, festzulegen.

7. Antriebseinheit nach zumindest einem der vorstehenden Ansprüche,
**dadurch gekennzeichnet , dass**
die Steuereinrichtung (10) dazu ausgebildet ist, die Soll-Bahnkurve (61-68) in Abhängigkeit von einer ermittelten Häufigkeit vorangegangener Öffnungsvorgänge des Flügels (5) innerhalb eines vorgegebenen Zeitraums festzulegen.

8. Antriebseinheit nach zumindest einem der vorstehenden Ansprüche,
**dadurch gekennzeichnet , dass**
die Steuereinrichtung (10) dazu ausgebildet ist, die Soll-Bahnkurve (61-68) in Abhängigkeit von einer maximalen Öffnungsstellung des Flügels (5), einer Öffnungsgeschwindigkeit des Flügels (5) und/oder der Form einer tatsächlichen Bahnkurve des Flügels (5) während eines vorangegangenen Öffnungsvorgangs festzulegen.

9. Antriebseinheit nach zumindest einem der vorstehenden Ansprüche,
**dadurch gekennzeichnet, dass**
die Steuereinrichtung (10) Mittel (71) zum Kommunizieren mit der Steuereinrichtung (10) einer weiteren Antriebseinheit (1) umfasst und dazu ausgebildet ist, die Soll-Bahnkurve (61-68) in Abhängigkeit von einem Betriebszustand der weiteren Antriebseinheit (1) festzulegen.

10. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) in Abhängigkeit von einem Unfallverhütungskriterium festzulegen.

11. Antriebseinheit nach zumindest einem der vorstehenden Ansprüche,
**dadurch gekennzeichnet, dass** die Steuereinrichtung (10) dazu ausgebildet ist, die Soll-Bahnkurve (61-68) bedarfsweise während eines bereits begonnenen Schließvorgangs neu festzulegen.

12. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) anhand eines manuell durchgeführten Schließvorgangs einzulernen.

13. Antriebseinheit nach zumindest einem der vorstehenden Ansprüche,
**dadurch gekennzeichnet, dass**
die Steuereinrichtung (10) dazu ausgebildet ist, für die Ansteuerung des Elektromotors (22) anhand der festgelegten Soll-Bahnkurve (61-68) eine Interpolation von Stützstellen der Soll-Bahnkurve (61-68) auszuführen.

14. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) aus einer Nachschlagetabelle auszulesen.

15. Antriebseinheit nach zumindest einem der vorstehenden Ansprüche,
**dadurch gekennzeichnet, dass**
die Steuereinrichtung (10) dazu ausgebildet ist, die Soll-Bahnkurve (61-68) in einen Soll-Rotationsverlauf einer Motorwelle (24) des Elektromotors (22) oder einer Ausgangswelle (27) der Antriebseinheit (1) umzurechnen und
den Elektromotor (22) auf Grundlage des Soll-Rotationsverlaufs anzusteuern.

16. Verfahren zum Schließen eines Flügels (5) einer Tür oder eines Fensters mittels einer Antriebseinheit (1) nach einem der vorstehenden Ansprüche, die einen Energiespeicher (28) zum Bereitstellen einer Schließkraft zum Schließen des Flügels (5), eine der Schließkraft entgegenwirkende Dämpfungseinrichtung (20), die einen als Generator betreibbaren und mit einem Betätigungselement (27) der Antriebseinheit (1) koppelbaren Elektromotor (22) umfasst, und eine Steuereinrichtung (10) zum Ansteuern des Elektromotors (22) aufweist,
**dadurch gekennzeichnet, dass**
eine Soll-Bahnkurve (61-68) festgelegt wird, welche eine Stellung des Flügels (5) oder eine Schließgeschwindigkeit des Flügels (5) in Abhängigkeit von der Zeit angibt, und die Ansteuerung des Elektromotors (22) zur Dämpfung der Schließbewegung des Flügels (5) auf Grundlage der festgelegten Soll-Bahnkurve (61-68) durchgeführt wird, wobei die Steuereinrichtung (10) dazu ausgebildet ist, beim Festlegen der Soll-Bahnkurve (61-68) einen Zulässigkeitsbereich (33, 43, 53) zu berücksichtigen, der durch zwei Grenzkurven (35, 37) bestimmt ist und die Steuereinrichtung (10) dazu ausgebildet ist, die Soll-Bahnkurve (61-68) vor jedem Schließvorgang neu festzulegen, wobei ferner die Grenzkurven (35, 37) in Abhängigkeit von einer ermittelten Ausgangsstellung des zu schließenden Flügels (5), einer maximalen Dämpfungskraft der Dämpfungseinrichtung (20) und einer Stellreserve bestimmt sind.

## Claims

1. Drive unit (1) for closing a leaf (5) of a door or of a window, having an energy store (28) for providing a closing force for closing the leaf (5), in particular a closing spring, having a damping device (20) which counteracts the closing force and comprises an electric motor (22) which can be operated as a generator and can be coupled to an actuating element (27) of the drive unit (1), and having a control device (10) for driving the electric motor (22),
**characterized in that**
the control device (10) is designed to define a target trajectory (61-68) which indicates a position of the leaf (5) or a closing speed of the leaf (5) as a function of time, and to drive the electric motor (22) for damping the closing movement of the leaf (5) based on the defined target trajectory (61-68), wherein the control device (10) is designed to take into account, when defining the target trajectory (61-68), a permissibility range (33, 43, 53) which is determined by two boundary curves (35, 37), and the control device (10) is designed to redefine the target trajectory (61-68) before each closing process,
wherein furthermore the boundary curves (35, 37) are determined depending on an ascertained starting position of the leaf (5) to be closed, a maximum damping force of the damping device (20) and an actuation reserve.

2. Drive unit according to Claim 1,
**characterized in that**
the boundary curves (35, 37) are determined depending on a movement specification for the leaf (5) to be closed, in particular a desired closing time and/or a desired final speed.

3. Drive unit according to at least one of the preceding claims,
**characterized in that**
the control device (10) is designed to select the target trajectory (61-68) from a set of discrete target trajectories (61-68) depending on a selection criterion.

4. Drive unit according to Claim 3,
**characterized in that**
the target trajectories (61-68) of the set of discrete target trajectories correspond in terms of at least one specification parameter and differ in terms of at least one variation parameter.

5. Drive unit according to at least one of the preceding claims,
**characterized in that**
the control device (10) is designed to define the target trajectory (61-68) depending on the current date, on the current time of day and/or on the current day of the week.

6. Drive unit according to at least one of the preceding claims,
**characterized in that**
the control device (10) is designed to define the target trajectory (61-68) depending on an ascertained environmental parameter, in particular on a temperature, a temperature difference and/or on an atmospheric pressure.

7. Drive unit according to at least one of the preceding claims,
**characterized in that**
the control device (10) is designed to define the target trajectory (61-68) depending on an ascertained frequency of previous opening processes of the leaf (5) within a specified time period.

8. Drive unit according to at least one of the preceding claims,
**characterized in that**
the control device (10) is designed to define the target trajectory (61-68) depending on a maximum opening position of the leaf (5), an opening speed of the leaf (5) and/or the shape of an actual trajectory of the leaf (5) during a previous opening process.

9. Drive unit according to at least one of the preceding claims,
**characterized in that**
the control device (10) comprises means (71) for communicating with the control device (10) of a further drive unit (1) and is designed to define the target trajectory (61-68) depending on an operating state of the further drive unit (1).

10. Drive unit according to at least one of the preceding claims,
**characterized in that**
the control device (10) is designed to define the target trajectory (61-68) depending on an accident prevention criterion.

11. Drive unit according to at least one of the preceding claims,
**characterized in that**
the control device (10) is designed to redefine the target trajectory (61-68) during a closing process that has already started, if necessary.

12. Drive unit according to at least one of the preceding claims,
**characterized in that**
the control device (10) is designed to learn the target trajectory (61-68) based on a closing process that has been manually carried out.

13. Drive unit according to at least one of the preceding claims,
**characterized in that**
the control device (10) is designed to perform interpolation of supporting points of the target trajectory (61-68) based on the defined target trajectory (61-68) for driving the electric motor (22).

14. Drive unit according to at least one of the preceding claims,
**characterized in that**
the control device (10) is designed to read the target trajectory (61-68) from a lookup table.

15. Drive unit according to at least one of the preceding claims,
**characterized in that**
the control device (10) is designed to convert the target trajectory (61-68) into a target rotation profile of a motor shaft (24) of the electric motor (22) or an output shaft (27) of the drive unit (1) and to drive the electric motor (22) on the basis of the target rotation profile.

16. Method for closing a leaf (5) of a door or of a window by means of a drive unit (1) according to any of the preceding claims, which has an energy store (28) for providing a closing force for closing the leaf (5), has a damping device (20) which counteracts the closing force and comprises an electric motor (22) which can be operated as a generator and can be coupled to an actuating element (27) of the drive unit (1), and has a control device (10) for driving the electric motor (22),
**characterized in that**
a target trajectory (61-68) which indicates a position of the leaf (5) or a closing speed of the leaf (5) as a function of time is defined, and the electric motor (22) is driven for damping the closing movement of the leaf (5) on the basis of the defined target trajectory (61-68), wherein the control device (10) is designed to take into account, when defining the target trajectory (61-68), a permissibility range (33, 43, 53) which is determined by two boundary curves (35, 37), and the control device (10) is designed to redefine the target trajectory (61-68) before each closing process, wherein furthermore the boundary curves (35, 37) are determined depending on an ascertained starting position of the leaf (5) to be closed, a maximum damping force of the damping device (20) and an actuation reserve.

## Revendications

1. Unité d'entraînement (1) permettant de fermer un battant (5) d'une porte ou d'une fenêtre, comprenant un accumulateur d'énergie (28) pour fournir une force de fermeture pour fermer le battant (5), en particulier un ressort de fermeture, un dispositif d'amortissement (20) s'opposant à la force de fermeture et qui comprend un moteur électrique (22) pouvant fonctionner en mode générateur et pouvant être couplé à un élément d'actionnement (27) de l'unité d'entraînement (1), et un dispositif de commande (10) pour piloter le moteur électrique (22),
**caractérisée en ce que** le dispositif de commande (10) est réalisé pour définir une trajectoire de consigne (61-68) qui indique une position du battant (5) ou une vitesse de fermeture du battant (5) en fonction du temps, et pour effectuer le pilotage du moteur électrique (22) pour amortir le mouvement de fermeture du battant (5) à l'aide de la trajectoire de consigne (61-68) définie, dans laquelle, lors de la définition de la trajectoire de consigne (61-68), le dispositif de commande (10) est réalisé pour tenir compte d'une plage admissible (33, 43, 53) qui est déterminée par deux courbes limites (35, 37), et le dispositif de commande (10) est réalisé pour redéfinir la trajectoire de consigne (61-68) avant chaque opération de fermeture, dans laquelle en outre les courbes limites (35, 37) sont déterminées en fonction d'une position de départ établie du battant (5) à fermer, d'une force d'amortissement maximale du dispositif d'amortissement (20) et d'une réserve de réglage.

2. Unité d'entraînement selon la revendication 1, **caractérisée en ce que** les courbes limites (35, 37) sont déterminées en fonction d'une spécification de mouvement pour le battant (5) à fermer, en particulier d'un temps de fermeture souhaité et/ou d'une vitesse finale souhaitée.

3. Unité d'entraînement selon au moins l'une des revendications précédentes, **caractérisée en ce que** le dispositif de commande (10) est réalisé pour sélectionner la trajectoire de consigne (61-68) en fonction d'un critère de sélection dans un ensemble de trajectoires de consigne discrètes (61-68).

4. Unité d'entraînement selon la revendication 3, **caractérisée en ce que** les trajectoires de consigne (61-68) de l'ensemble de trajectoires de consigne discrètes coïncident en ce qui concerne au moins un paramètre de spécification et se distinguent en ce qui concerne au moins un paramètre de variation.

5. Unité d'entraînement selon au moins l'une des revendications précédentes, **caractérisée en ce que** le dispositif de commande (10) est réalisé pour définir la trajectoire de consigne (61-68) en fonction de la date actuelle, de l'heure actuelle et/ou du jour de la semaine actuel.

6. Unité d'entraînement selon au moins l'une des revendications précédentes, **caractérisée en ce que** le dispositif de commande (10) est réalisé pour définir la trajectoire de consigne (61-68) en fonction d'un paramètre environnemental établi, en particulier d'une température, d'une différence de température et/ou d'une pression atmosphérique.

7. Unité d'entraînement selon au moins l'une des revendications précédentes, **caractérisée en ce que** le dispositif de commande (10) est réalisé pour définir la trajectoire de consigne (61-68) en fonction d'une fréquence établie d'opérations d'ouverture précédentes du battant (5) dans une période de temps prédéfinie.

8. Unité d'entraînement selon au moins l'une des revendications précédentes, **caractérisée en ce que** le dispositif de commande (10) est réalisé pour définir la trajectoire de consigne (61-68) en fonction d'une position d'ouverture maximale du battant (5), d'une vitesse d'ouverture du battant (5) et/ou de la forme d'une trajectoire réelle du battant (5) pendant une opération d'ouverture précédente.

9. Unité d'entraînement selon au moins l'une des revendications précédentes, **caractérisée en ce que** le dispositif de commande (10) comprend des moyens (71) pour communiquer avec le dispositif de commande (10) d'une unité d'entraînement (1) supplémentaire et est réalisé pour définir la trajectoire de consigne (61-68) en fonction d'un état de fonctionnement de l'unité d'entraînement (1) supplémentaire.

10. Unité d'entraînement selon au moins l'une des revendications précédentes, **caractérisée en ce que** le dispositif de commande (10) est réalisé pour définir la trajectoire de consigne (61-68) en fonction d'un critère de prévention des accidents.

11. Unité d'entraînement selon au moins l'une des revendications précédentes, **caractérisée en ce que** le dispositif de commande (10) est réalisé pour redéfinir la trajectoire de consigne (61-68) si nécessaire pendant une opération de fermeture déjà entamée.

12. Unité d'entraînement selon au moins l'une des revendications précédentes, **caractérisée en ce que** le dispositif de commande (10) est réalisé pour apprendre la trajectoire de consigne (61-68) à l'aide d'une opération de fermeture effectuée manuellement.

13. Unité d'entraînement selon au moins l'une des revendications précédentes, **caractérisée en ce que** le dispositif de commande (10) est réalisé pour effectuer une interpolation des points de données de la trajectoire de consigne (61-68) pour le pilotage du moteur électrique (22) à l'aide de la trajectoire de consigne (61-68) définie.

14. Unité d'entraînement selon au moins l'une des revendications précédentes, **caractérisée en ce que** le dispositif de commande (10) est réalisé pour lire la trajectoire de consigne (61-68) dans une table de consultation.

15. Unité d'entraînement selon au moins l'une des revendications précédentes, **caractérisée en ce que** le dispositif de commande (10) est réalisé pour convertir la trajectoire de consigne (61-68) en une courbe de rotation de consigne d'un arbre moteur (24) du moteur électrique (22) ou d'un arbre de sortie (27) de l'unité d'entraînement (1) et pour piloter le moteur électrique (22) sur la base de la courbe de rotation de consigne.

16. Procédé permettant de fermer un battant (5) d'une porte ou d'une fenêtre au moyen d'une unité d'entraînement (1) selon l'une quelconque des revendications précédentes qui présente un accumulateur d'énergie (28) pour fournir une force de fermeture pour fermer le battant (5), un dispositif d'amortissement (20) s'opposant à la force de fermeture et qui comprend un moteur électrique (22) pouvant fonctionner en mode générateur et pouvant être couplé à un élément d'actionnement (27) de l'unité d'entraînement (1), et un dispositif de commande (10) pour piloter le moteur électrique (22),
**caractérisé en ce qu'**une trajectoire de consigne (61-68) est définie qui indique une position du battant (5) ou une vitesse de fermeture du battant (5) en fonction du temps, et le pilotage du moteur électrique (22) pour amortir le mouvement de fermeture du battant (5) est effectué sur la base de la trajectoire de consigne (61-68) définie, dans lequel, lors de la définition de la trajectoire de consigne (61-68), le dispositif de commande (10) est réalisé pour tenir compte d'une plage admissible (33, 43, 53) qui est déterminée par deux courbes limites (35, 37), et le dispositif de commande (10) est réalisé pour redéfinir la trajectoire de consigne (61-68) avant chaque opération de fermeture, dans lequel en outre les courbes limites (35, 37) sont déterminées en fonction d'une position de départ établie du battant (5) à fermer, d'une force d'amortissement maximale du dispositif d'amortissement (20) et d'une réserve de réglage.
